# EUROPÄISCHE PATENTANMELDUNG

(11) **EP 1 066 929 A2**
(43) Veröffentlichungstag der Anmeldung: **10.01.2001**
(21) Anmeldenummer: 00105215.8
(22) Anmeldetag: 13.03.2000
(51) Int. Cl.: B25B 5/12, B25B 5/16

(54) **Kraftangetriebene Kniehebelspannvorrichtung mit dauermagnetischer Bremse**

(30) Priorität: 08.07.1999 DE 19931723
(71) Anmelder: TÜNKERS MASCHINENBAU GmbH, D-40880 Ratingen (DE)
(72) Erfinder: Josef-Gerhard Tünkers, D-40878 Ratingen (DE)
(74) Vertreter: Beyer, Rudi

(57) **Zusammenfassung**

Die Erfindung betrifft eine kraftangetriebene Kniehebelspannvorrichtung zur Verwendung im Karosseriebau der Kfz-Industrie mit einem Elektromotor als Antrieb. Bei Energieausfall hält eine dauermagnetische Bremse den Spannarm oder die Greifarme jeweils in Position fest, auch dann, wenn mit den beweglichen Teilen Konturstücke oder sonstige Lasten verbunden sein sollten.

## Beschreibung

Die Erfindung betrifft eine kraftangetriebene Kniehebelspannvorrichtung zur Verwendung im Karosseriebau der Kfz-Industrie, mit einem Spannkopf und einem sich koaxial daran anschließenden Gehäuse, das einen elektromotorischen Antrieb für ein das Kniehebelgelenk abwechselnd in entgegengesetzten Richtungen linear antreibbaren Teil aufnimmt, das mit einem Längenabschnitt im Spannkopf angeordnet ist.

### Stand der Technik

Kniehebelspannvorrichtungen sind in mannigfaltigen Konstruktionen vorbekannt. In der Regel bestehen die im Karosseriebau eingesetzten Kniehebelspannvorrichtungen aus einem Spannkopf und einem sich koaxial daran anschließendem Gehäuse, in dem ein abwechselnd beidseitig durch Druckmitteldruck, insbesondere durch Luftdruck zu beaufschlagender Kolben längsverschieblich und dichtend geführt ist, der mit einer Kolbenstange gekuppelt ist, die den Spannkopf teilweise durchgreift. Mit dem Ende der Kolbenstange ist eine Kniehebelgelenkanordnung gekuppelt, die einen Spannarm antreibt, der mit einem Widerlager, zum Beispiel in Form eines Kiefers oder dergleichen zusammenwirkt, um die miteinander zu verspannenden Bauteile wie Bleche oder dergleichen gegeneinander zu verspannen und dadurch zu halten ― DE 36 13 644 C2.

Kniehebelspannvorrichtungen werden auch als Handspanner und als Unterflurspanner eingesetzt.

Besonders beim Einsatz in Fertigungsanlagen des Karosseriebaus der Kfz-Industrie werden mit dem Spannarm oder dergleichen sogenannte Konturenstücke oder sonstige Lasten verbunden. Fällt die Energiezufuhr weg, muß sichergestellt werden, daß sich solche Kniehebelspannvorrichtungen oder Greifer nicht unbeabsichtigt lösen oder der Spannarm oder der Greifer gar herunterfallen. Um dies zu verhindern hat man auch schon Lamellenbremsen eingesetzt, die sich aber nicht durchsetzen konnten.

Aus der DE-GM 75 23 938 ist ein Fahrrad-Ergometer mit einem nach Art eines Fahrrads ausgebildeten Gestell vorbekannt, mit einer Bremsvorrichtung und einer dazugehörigen angetriebenen Bremsscheibe, mit einer Einstellvorrichtung für einen Bremsmoment, einem dieses anzeigenden Markierungselement und einer nach Leistung geeigneten Skala auf einer Instrumententafel, wobei auf einer festen Achse eine angetriebene Wirbelstromscheibe gelagert ist, daß daneben drehbar auf dieser Achse eine in der Wirbelstromscheibe Wirbelströme erzeugende permanente Magnetscheibe gelagert ist, daß an dieser ein starres Pendelgewicht befestigt ist, daß der Abstand zwischen Magnetscheibe und Wirbelstromscheibe mittels der Einstellvorrichtung für das Bremsmoment einstellbar ist, und daß die Magnetscheibe mit den ihre Winkelstellung auf der Skala anzeigenden Markierungselement verbunden ist. An der Bremscheibe ist ein Markierungsblech befestigt, daß eine Markierungsfläche auf einer zylindrischen Fläche des Markierungsbleches, welcher die zylindrische Fläche der Magnetscheibe konzentrisch umgibt, angebracht ist, und daß die Markierungsfläche an einer Ausnehmung eines dazu konzentrischen Skalenbleches sichtbar ist. Die Einstellvorrichtung für das Bremselement geht aus folgenden Teilen hervor:
a) Aus einer zwischen der Wirbelstromscheibe und der Magnetscheibe gelagerten Druckfeder,
b) aus einer an der gegenüberliegenden Seite der Magnetscheibe auf der Achse verschiebbar gelagerten Druckscheibe,
c) aus einem senkrecht zur Achse verschiebbar neben der Druckscheibe gelagerten Schieber,
d) aus am Schieber und an der Druckscheibe angeformten aufeinanderliegenden und bei Betätigung des Schiebers aufeinandergleitenden schiefen Ebenen,
e) aus einer am Gestell gelagerten mit einem Drehknopf versehenen den Schieber betätigenden Spindel.

Wie üblich, ist auch bei diesem Fahrrad-Ergometer am Gestell ein Schwungrad gelagert, welches über einen Kettentrieb mit den Pedalen verbunden ist, und welches getrieblich mit einem Riemen mit der Bremseinrichtung verbunden ist, wobei das Schwungrad als Riemenscheibe dient. Eine auf der Achse der Bremseinrichtung drehbar gelagerte Riemenscheibe ist mittels einer dazwischen liegenden aus Kunststoff bestehenden Distanzscheibe fest mit der Wirbelstromscheibe verbunden. Die schwingungsdämpfende Einrichtung besteht aus einer an der Magnetscheibe anliegend gehaltenen Dämpfungsscheibe mit Filzbelag.

Aus der DE 43 14 628 C1 ist eine elektrische Dreh- oder Schwenkeinheit mit einem unmittelbar angetriebenen, bürstenlosen Motor mit einem als Stator dienenden Grundgehäuse und einem Rotor zur Verwendung an Schwenkvorrichtungen für Handhabungseinrichtungen, zum Beispiel für Industrieroboter vorbekannt, wobei
a) der Motor mit wenigstens einer integrierten fluidischen und/oder elektrischen Durchführung in Form von Anschlußbohrungen und Kanälen versehen ist;
b) der Motor als Außenläufer mit einer Hohlwelle (Hohlwellenmotor) versehen ist;
c) ein separater Servoverstärker und eine Regelelektronik zur Regelung der Winkelstellung, der Drehgeschwindigkeit und der Beschleunigung sowie der Verzögerung und des Drehmoments vorgesehen sind;
d) der Motor mit seiner feststehenden Bodenseite auf dem Grundgehäuse montiert ist, in dem sich Steckverbinder für die Energieversorgungen und die Signalleitungen des Motors befinden sowie die Anschlüsse für die Durchführung des Druckmittels und der elektrischen Signale;
e) in der Hohlwelle die fluidische Energiedurchführung angeordnet ist, derart, daß ein Verteilerflansch, der an der feststehenden Bodenseite des Motors befestigt ist und ein Drehverteiler vorgesehen sind, der über einen Drehteller mit dem rotierenden Außenläufer verbunden ist;
f) Druckmittelanschlüsse am Grundgehäuse über Rohr- oder Schlauchleitungen zum feststehenden Verteilerflansch geführt sind, wo sie auf dem Umfang des Verteilerflansches in separaten Bohrungen enden;
g) der Drehverteiler um die feststehende Achse des Verteilerflansches drehbar ist;
h) in der Mittenbohrung des Drehverteilers sich Ringkanäle befinden, in welche Bohrungen des Verteilerflansches ausmünden;
i) in jeden Ringkanal jeweils ein Kanal der Druckmitteldurchführung ausmündet und die einzelnen Ringkanäle durch umlaufende Dichtungen (druckmitteldicht) gegeneinander abgedichtet sind;
j) die elektrischen Signal- und Energiedurchführungen über eine integrierte Schleifringkapsel erfolgt, derart, daß auf dem Rotor der Schleifringkapselung jeder elektrischen Leitung ein umlaufender Schleifring zugeordnet ist, während sich am Stator Bürsten befinden, die mit dem jeweiligen Schleifring in Eingriff stehen;
k) der Rotor der Schleifringkapselung über eine Kabeldurchführung mit dem rotierenden Drehverteiler in Verbindung steht und der Stator über ein Trägerteil mit dem feststehenden Verteilerflansch verbunden ist;
l) die Kabeldurchführung die Hohlwelle koaxial durchgreift und durch die Kabeldurchführung elektrische Leitungen hindurchgeführt sind, die jeweils von einem Schleifring kommend zu einem Steckverbinder geführt sind, wobei der Steckverbinder an der Oberseite des Drehverteilers befestigt ist und vom Drehteller her zugänglich ist für den Anschluß von Sensoren oder elektrische Einheiten.

Im Grundgehäuse befindet sich eine Permanentmagnetbremse, die im abgeschalteten Zustand oder bei Energieausfall eingreift und die augenblickliche Position der Einheit hält. Im feststehenden Teil der Bremse befindet sich ein Dauermagnet, der von einer Spule umschlossen ist, während auf der rotierenden Hohlwelle sich eine Bremsscheibe befindet, die durch den Dauermagneten angezogen und auf einer Reibfläche bei Stromausfall oder bei Abschalten des Stromes andrückbar ist, wobei die Bremsscheibe auf der Achse der rotierenden Kabeldurchführung befestigt ist.

Die DE 29 31 539 C2 betrifft eine schaltbare, dauermagnetische Bremse für Schienenfahrzeuge mit in Längsrichtung der Schiene angeordneten Polstücken wechselnder Polarität, die gegenüberliegende, segmentförmige Aussparungen besitzen, wobei an den Polstücken anliegen:
- feststehende Dauermagnete, die mit dem einen Pol an den seitlichen gegenüberliegenden Flächen der Polstücke und mit dem anderen Pol an in Längsrichtung der Schiene verlaufenden seitlichen Rückschlußplatten anliegen,
- drehbare Dauermagnete, die quer zu ihren Drehachsen, die senkrecht zur Schienenlauffläche liegen, magnetisiert sind, wobei
- die drehbaren Dauermagnete sind auf ihren Polflächen mit segmentförmigen Eisenpolschuhen versehen und bilden so ein Dauermagnetsystem
- im eingeschalteten Zustand greifen die Eisenpolschuhe in die gegenüberliegenden, segmentförmigen Aussparungen der Polstücke ein, die dem Querschnitt der segmentförmigen Eisenpolschuhe so angepaßt sind, daß die wirksamen Poleisen (Polstücke und segmentförmige Eisenpolschuhe) einen geschlossenen viereckigen Querschnitt aufweisen und zur Vermeidung von Streuverlusten allseitig von Dauermagnetmaterial mit jeweils gleicher Polarität umgeben sind.

### Aufgabe

Der Erfindung liegt die Aufgabe zugrunde, eine kraftangetriebene Kniehebelspannvorrichtung so auszugestalten, daß beim Wegfall der Energiezufuhr ein unbeabsichtigtes Lösen oder gar Herunterfallen des Spannarmes oder dergleichen zuverlässig verhindert wird, und zwar mit einfachen konstruktiven Mitteln, ohne Energiezufuhr von außen.

### Lösung

Die Aufgabe wird durch die in **Patentanspruch 1** wiedergegebenen Merkmale gelöst.

### Einige Vorteile

Bei der Erfindung ist dem elektromotorischen Antrieb eine dauermagnetische Bremse zugeordnet, die unabhängig von äußerer Energiezufuhr ständig in Bereitschaftsstellung steht, so daß beim Wegfall der Energiezufuhr (Strom) zum Elektromotor die Bremswirkung sofort zur Verfügung steht und ein Zurückbewegen des Spannarmes oder dergleichen zuverlässig verhindert. Die dauermagnetische Bremse benötigt im wesentlichen nur zwei mit Spaltabstand zueinander befindliche Teile, die die dauermagnetischen Polpaare aufweisen. Dadurch sind solche Bremsen praktisch keinerlei Verschleiß ausgesetzt und demgemäß wartungsarm. Sie können gekapselt in dem Gehäuse raumsparend untergebracht werden, ohne daß die äußeren Abmessungen einer Kniehebelspannvorrichtung gegenüber herkömmlichen Bauarten verändert werden.

Grundsätzlich sind Permanentmagnetbremsen bekannt, da sie zum Beispiel als Hysteresekupplungen oder Hysteresebremsen oder als Wirbelstromkupplungen und ―bremsen eingesetzt werden ― Prospekt 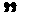 Ihr Partner für Dauermagnete" der Firma MS Magnetfabrik Schramberg-Sulgen.

Je mehr Polpaare ― Süd- und Nordpol ― man auf die einander gegenüberliegenden Teile der dauermagnetischen Bremse anordnet, desto geringer ist der Drehwinkel, bis zu dem die Bremse jeweils greift. Dieser Drehwinkel wird an einer üblichen Kniehebelspannvorrichtung über die Welle des Elektromotors in eine translatorische Bewegung umgesetzt, die sich wiederum über das Kniehebelgelenk auf den Spannarm oder die Greiffinger eines Greifers auswirken. Diese Verstellbewegung ist aber so gering, daß beim Energieausfall keinerlei Gefährdung oder sonstiger Nachteil entstehen kann. Es ist dabei selbstverständlich, daß die dauermagnetische Bremse so bemessen wird, daß sie entsprechend dem jeweils zu haltenden Gewicht ausgelegt ist.

### Weitere erfinderische Ausgestaltungen

In den **Patentansprüchen 2** bis **12** sind weitere erfinderische Ausgestaltungen und Lösungen beschrieben.

Die Kniehebelspannvorrichtung nach **Patentanspruch 2** ermöglicht eine besonders raumsparende und günstige Anordnung der scheibenförmigen Teile der dauermagnetischen Bremse, da der eine Teil im Stator oder im Gehäuse selbst angeordnet werden kann, während die Welle des Elektromotors zur Lagerung für das andere Teil der Magnetbremse dient.

**Patentanspruch 3** beschreibt eine vorteilhafte Ausführungsform der Erfindung.

In **Patentanspruch 4** ist eine weitere Kniehebelspannvorrichtung beschrieben, bei welcher die Welle des Elektromotors als Hohlwelle ausgebildet ist, in die das linear antreibbare als Schraubspindel ausgebildete Teil eintauchen kann. Dadurch ergibt sich eine raumsparende Konstruktion.

Dies gilt auch für **Patentanspruch 5**.

**Patentanspruch 6** beschreibt eine Ausführungsform, bei welcher das längenverstellbare als Spindel ausgebildete Teil an beiden Endabschnitten im Spannkopf selbst gelagert ist und eine Schraubmutter aufnimmt, die je nach Antriebsrichtung der Welle des Elektromotors sich in die eine oder andere Öffnung bewegt, um dadurch einen Spannarm oder dergleichen auf- und niederzuschwenken, der mit der Mutter über das Kniehebelgelenk gekuppelt ist.

**Patentanspruch 7** beschreibt eine weitere vorteilhafte Ausführungsform der Erfindung.

Eine leichtgängige Lösung beschreibt **Patentanspruch 8**.

Besonders vorteilhaft ist auch eine Lösung nach **Patentanspruch 9**, bei welcher der Spindel oder dergleichen ein Endanschlag zugeordnet ist. Dieser Endanschlag kann gemäß **Patentanspruch 10** in der Hohlwelle des Elektromotors angeordnet sein, und ist damit von außen unsichtbar und nimmt keinen besonderen Raum ein, so daß die gesamte Konstruktion entsprechend raumsparend baut.

Vorteilhafterweise ist der Endanschlag von der dem Spannkopf abgekehrten Seite her zur Veränderung des Schwenkwinkels des Spannarms einstellbar und arretierbar ― **Patentanspruch 11**. Dadurch läßt sich mit wenigen Handgriffen der Endanschlag einstellen.

Dieser Endanschlag kann gemäß **Patentanspruch 12** als Industriestoßdämpfer ausgebildet sein, um die Bewegung sanft abzubremsen.

In der Zeichnung ist die Erfindung ― teils schematisch ― an mehreren Ausführungsbeispielen veranschaulicht. Es zeigen:
- Fig. 1: eine Kniehebelspannvorrichtung, teils im Längsschnitt, teils in der Seitenansicht;
- Fig. 2: eine weitere Ausführungsform, ebenfalls in Spannstellung;
- Fig. 3: die aus Fig. 4 ersichtliche Ausführungsform in Offenstellung;
- Fig. 4: eine Ausführungsform mit zwei Greifarmen, die durch ein Kniehebelgelenk angetrieben werden, in Spann- bzw. Greifstellung;
- Fig. 5: die aus Fig. 2 ersichtliche Ausführungsform in Offenstellung;
- Fig. 6: eine weitere Ausführungsform der Erfindung, ebenfalls in Spannstellung und
- Fig. 7: die aus Fig. 6 ersichtliche Ausführungsform in Offenstellung.

Mit dem Bezugszeichen 1 ist ein Spannkopf bezeichnet, an den sich koaxial ein Gehäuse 2 anschließt, in dem ein Elektromotor mit Stator 3 und Rotor 4 anschließt. Mit dem Rotor 4 ist eine Welle 5 verbunden, die über ein Kupplungsstück 6 in einem Wälzlager 7 drehbar gelagert ist, das in einem Flansch 8 angeordnet ist. Der Flansch 8 ist durch mehrere nicht dargestellte Schrauben, die über seinen Umfang verteilt angeordnet sind mit der hier angeordneten Wand 9 des Spannkopfes 1 dicht, aber lösbar, verbunden.

In dem Kupplungsstück 6 ist eine als Schraubmutter ausgebildete Buchse 10 drehfest angeordnet, die an ihrer Innenseite mit Schraubgewinde 11 versehen ist. Dieses Schraubgewinde 11 korrespondiert mit einem Schraubgewinde 12 eines in Längsachsrichtung der Welle 5 in Richtung X bzw. Y linear antreibbaren Teils 13, das als Schraubspindel ausgebildet ist. Mit dem linear antreibbaren Teil 13 ist über ein Kniehebelgelenk 14 ein Spannarm 15 in Richtung A bzw. B schwenkbeweglich antreibbar. Der Spannarm 15 ist an einer an ihren entgegengesetzten Endabschnitten mit je einem Vierkant 16 versehenen Welle 5 auswechselbar gelagert.

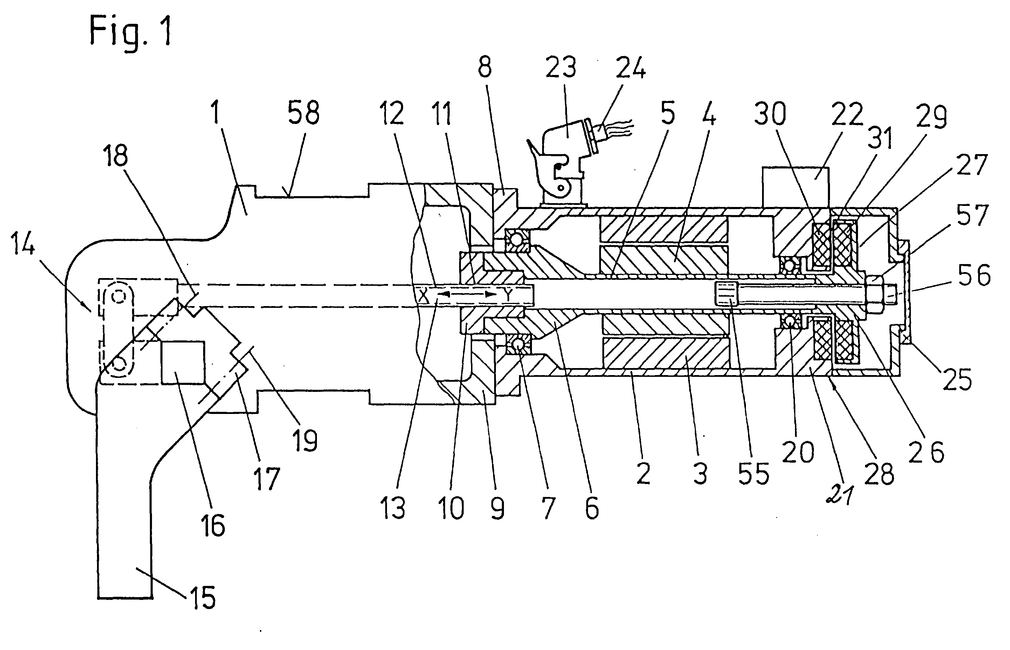

Hierzu besitzt sowohl der Spannarm 15 als auch ein Gegenstück 17 dem Vierkant 16 entsprechend angepaßte Ausformungen. Das Gegenstück 17 ist durch mehrere Schrauben mit dem Spannarm 15 gekuppelt. Von diesen Schrauben sind nur Mittellinien 18 und 19 in Fig. 1 veranschaulicht.

Die Welle 5 des im wesentlichen aus Stator 3 und Rotor 4 bestehenden Elektromotors ist an ihrem dem Wälzlager 7 abgekehrten Endabschnitt durch ein weiteres Wälzlager 20 in einem Lagerbock 21 drehbeweglich gelagert. Der Lagerbock 21 wird vorliegend durch eine Gehäuseschulter gebildet, die mit dem Gehäuse 2 einstückig verbunden ist.

Bei 22 ist ein Schütz angedeutet, während 23 einen Stecker für ein Elektrokabel 24 darstellt, über das elektrische Energie dem Elektromotor 3, 4 zuführbar ist.

Das Ende des Gehäuses 2 ist durch einen Bodendeckel 25 lösbar verschlossen. Der Bodendeckel 25 kann durch nicht dargestellte Schrauben mit dem Gehäuse 2 lösbar verbunden sein.

An dem freien, aus dem Lagerbock 21 hervorragenden Endabschnitt ist die Welle 5 des Elektromotors 3, 4 mit einer Verdickung 26 versehen, mit der ein topfförmiges Aufnahmeelement 27 verbunden ist, das das eine ringscheibenförmige Teil 29 einer dauermagnetischen Bremse 28 aufnimmt. Mit Spaltabstand 31 zu dem ringscheibenförmigen Teil 29 der dauermagnetischen Bremse 28 ist ein weiteres ringscheibenförmiges Teil 30 angeordnet. Die beiden ringscheibenförmigen Teile 29 und 30 sind in geeigneter Weise mit dauermagnetischen Polpaaren ― Nord und Südpolen ― bestückt. Zum Beispiel können auf jeder Scheibe fünf solcher Paare, also insgesamt auf jedem Teil 29 und 30 jeweils zehn dauermagnetische Teile (Pole) vorgesehen sein.

Fällt die Stromzufuhr über das Elektrokabel 24 zum Elektromotor 3, 4 aus, stoppt die dauermagnetische Bremse 28 sofort die Drehbewegung der Welle 5 und damit die Schwenkbewegung. Sollte sich der Spannarm 15 in Ruhestellung oder Spannstellung befinden, wird er durch die dauermagnetische Bremse 28 sofort in der jeweiligen Lage blockiert, auch dann, wenn am Spannarm 15 nicht dargestellte sogenannte Konturstücke oder andere Werkzeuge angeordnet sind, die zum Teil ein erhebliches Gewicht besitzen.

Auch in diesem Falle wird ein unbeabsichtigtes Herunterbewegen des Spannarmes 15 oder dergleichen durch die dauermagnetische Bremse 28 zuverlässig verhindert.

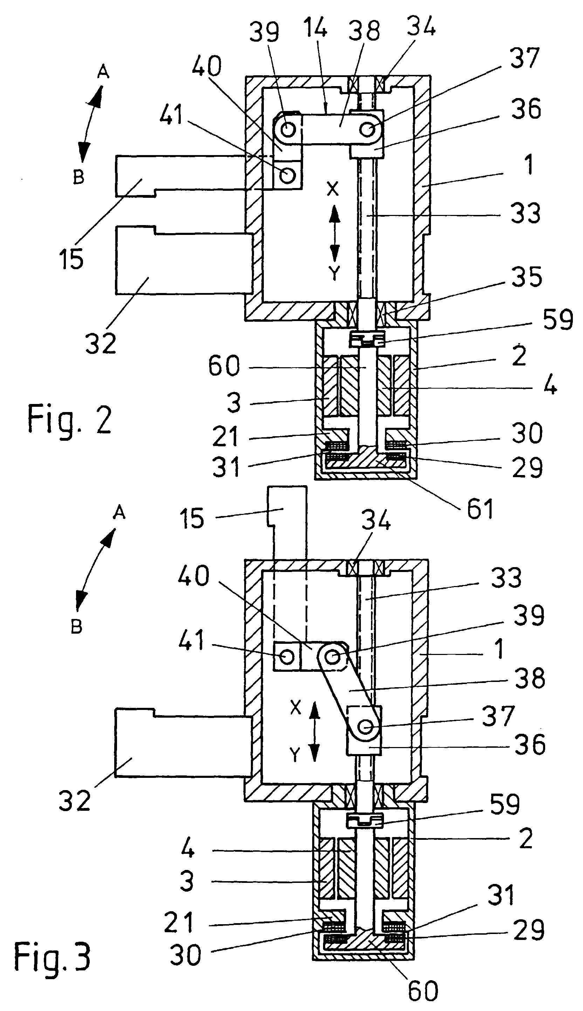

Bei der Ausführungsform nach Fig. 2 oder 3 sind für Teile gleicher Funktion die gleichen Bezugszeichen wie bei der Ausführungsform nach Fig. 1 verwendet worden.

Bei dieser Ausführungsform ist mit dem Spannkopf 1 noch ein sogenannter als Widerlager ausgebildeter Kiefer 32 fest verbunden. Zwischen dem Spannarm 15 und dem Kiefer 32 oder noch zusätzlich vorgesehener Konturstücke können geeignete Werkstücke, zum Beispiel miteinander zu verschweißende Bleche, eingespannt werden.

Ein in dem Gehäuse 2 angeordneter Elektromotor treibt eine Gewindespindel 33 an, die an ihren beiden Enden in Wälzlagern 34 bzw. 35 gelagert ist. Auf der Spindel ist eine Schraubmutter 36 angeordnet, die je nach Drehrichtung der Gewindespindel 33 durch den Elektromotor in Richtung X bzw. Y bewegt wird. Mit der Schraubmutter 36 ist über eine Schwenkachse 37 ein Lenker 38 schwenkbeweglich gekuppelt, der am entgegengesetzten Ende durch eine weitere Schwenkachse 39 mit einem Lenker 40 gekuppelt ist, der um eine gehäusefeste Achse 41 schwenkbeweglich gelagert ist. Über die Achse 41 ist auch der Spannarm 15 in Richtung A bzw. B schwenkbeweglich gelagert.

Auch bei dieser Ausführungsform ist dem Elektromotor 3 und 4 wiederum eine dauermagnetische Bremse 28 zugeordnet, die bei Energieausfall den Spannarm 15 mit daran gegebenenfalls angeordneten weiteren Werkzeuge zuverlässig abbremst und in der jeweiligen Lage hält.

Mit dem Bezugszeichen 59 ist eine Kupplung bezeichnet, die mit einer Welle 60 getrieblich und drehfest verbunden ist. Die Welle 60 trägt an ihrem dem Spannkopf 1 abgekehrten Ende ein Aufnahmeelement 61, das das ringförmige Teil 29 mit dem Permanentmagneten aufweist. Mit Spaltabstand 31 gegenüberliegend ist wiederum das ringförmige Teil 30, ebenfalls mit mehreren Permanentmagnetenpaaren bestückt angeordnet. Die Anordnung und Ausbildung der ringförmigen Teile 29 und 30 mit ihren Permanentmagnetenpolpaaren kann wie bei den vorbeschriebenen Ausführungsformen gestaltet sein. Das Gehäuse 2 umschließt auch die ringförmigen Teile 29 und 30 der Permanentmagnetbremse. Stator 3 und Rotor 4 sind wie bei der Ausführungsform nach Fig. 1 ausgebildet und angeordnet. Auch bei dieser Ausführungsform erfolgt keine Energiezufuhr zu den Permanentmagneten, so daß hier die Wärmeentwicklung denkbar gering ist und sich die Permanentmagnetbremse demzufolge konstruktiv einfach, raumsparend und demgemäß kompakt ausführen und kapseln läßt. Das Aufnahmeelement 61 kann ebenfalls scheibenförmig ausgebildet sein und kann mit der Welle 60 materialmäßig einstückig gestaltet werden. Es ist aber auch eine funktionelle Einstückigkeit, zum Beispiel durch Schrauben, Stiften oder Splinten, möglich.

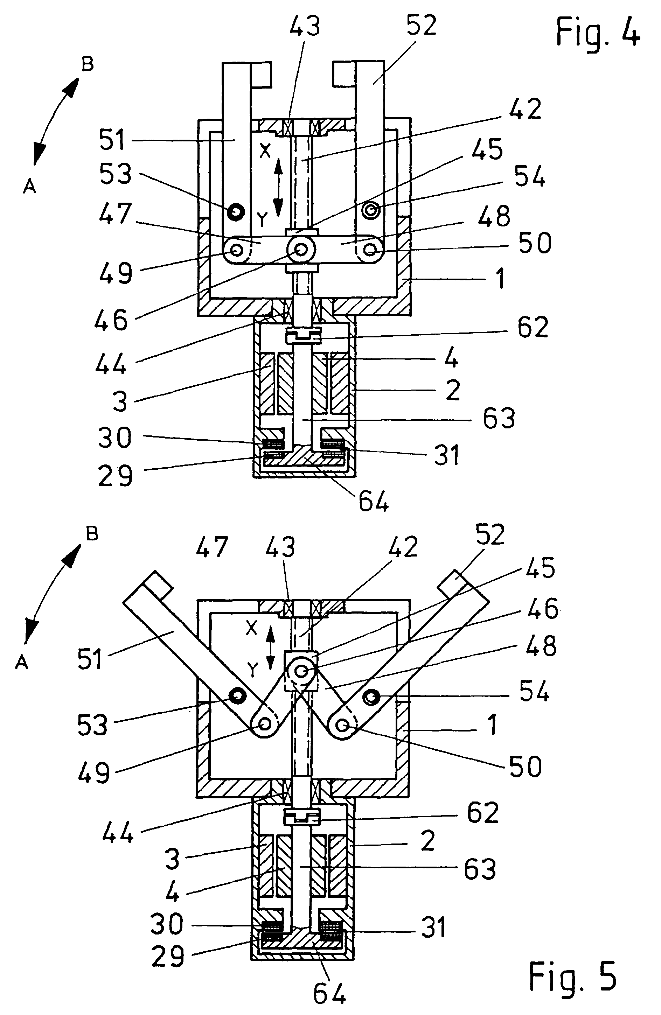

Bei der Ausführungsform nach den Fig. 4 und 5 sind für Teile gleicher Funktion die gleichen Bezugszeichen verwendet worden, wie sie bei der Ausführungsform nach Fig. 1 verwendet worden sind.

Diese Ausführungsform unterscheidet sich von den vorbeschriebenen Ausführungsformen dadurch, daß der Elektromotor eine Schraubspindel 42 in die eine oder andere Drehrichtung antreibt. Die Schraubspindel 42 ist an ihren Enden in je einem Wälzlager 43 bzw. 44 reibungsarm gelagert. Auf der Schraubspindel 42 ist eine Schraubmutter 45 in die eine oder andere Drehrichtung antreibbar. Mit der Schraubmutter 45 sind über eine Schwenkachse 46 zwei Lenker 47 bzw. 48 schwenkbeweglich gekuppelt, die an ihren einander abgekehrten Enden über Achsen 49 bzw. 50 schwenkbeweglich mit Greifarmen 51 bzw. 52 gekuppelt sind, die über je eine gehäusefeste Achse 53 bzw. 54 ebenfalls in Richtung A bzw. B gegeneinander oder voneinander synchron verschwenkbar sind. Zwischen sich können die Greifer Werkstücke oder dergleichen ergreifen.

Auch bei dieser Ausführungsform hält eine dauermagnetische Bremse 28 zuverlässig die Greiferarme 51, 52 in der jeweils angenommenen Position, auch dann, wenn sich hieran weitere Konturstücke oder Werkzeuge befinden sollten.

Auch bei dieser Ausführungsform ist die Schraubspindel 42 über eine Kupplung 62 mit einer Welle 63 getrieblich verbunden, die wiederum an ihrem Ende ein Aufnahmeelement 64 aufweist, das topf- oder scheibenförmig gestaltet sein kann und wiederum ein ringförmiges Teil 29 mit Spaltabstand 31 zu dem ringförmigen Teil 30 aufnimmt. Die ringförmigen Teile 29 und 30 sind wiederum Teile der Permanentmagnetbremse und weisen eine Mehrzahl oder Vielzahl von Polpaaren auf, die die Magnetbremse bilden. Wie bei der Ausführungsform nach den Fig. 2 und 3 ist die Permanentmagnetbremse in dem Gehäuse 2 gekapselt angeordnet und hat auch bei dieser Ausführungsform keinerlei Energiezufuhr von außen.

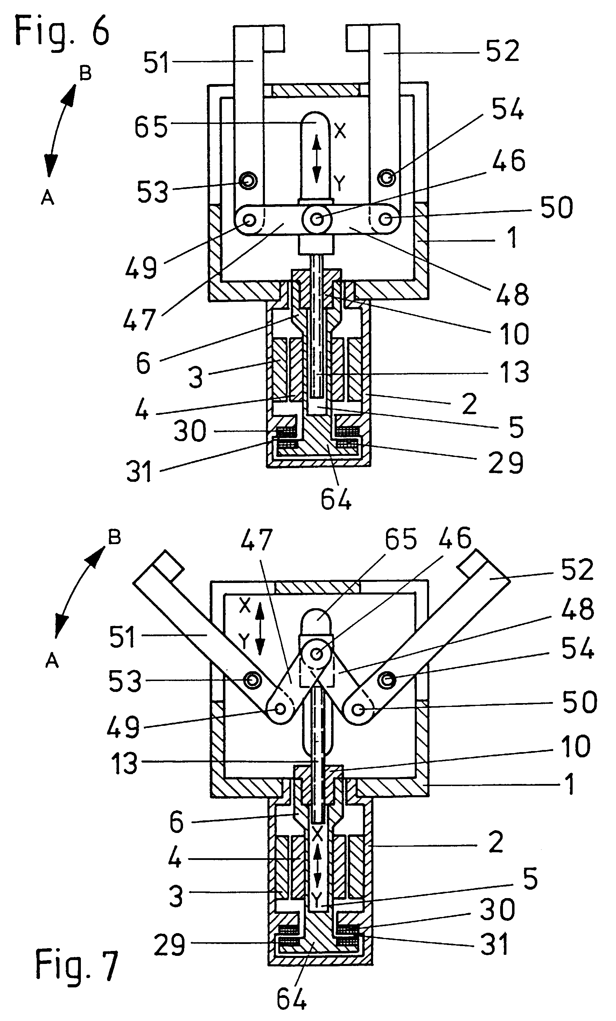

Bei der Ausführungsform nach den Fig. 6 und 7 sind wiederum für Teile gleicher Funktion die gleichen Bezugszeichen wie bei den vorbestehenden Ausführungsformen verwendet worden. Diese Ausführungsform unterscheidet sich von den vorbeschriebenen Ausführungsformen dadurch, daß die Greifarme 51 und 52 über eine Hohlwelle 5 durch den Elektromotor angetrieben sind, wobei die Schwenkachse 46 bzw. mit ihren diametral gegenüberliegenden Endabschnitten mit nicht dargestellten Führungsrollen versehen sind, die zum Beispiel in reibungsarmen Nadellagern gelagert sein können. Die Führungsrollen sind in Führungsnuten in Längsachsrichtung der Hohlwelle 5 und damit auch der Schraubspindel 13 geführt. Die Führungsnuten können in Wandungen des Spannkopfes 1 angeordnet sein. Von den Führungsnuten ist nur eine mit dem Bezugszeichen 65 bezeichnet. Die gegenüberliegende Führungsnut ist formgleich und gleichgerichtet angeordnet und verläuft parallel zu der dargestellten Führungsnut 65.

Die Schraubgewinde können bei allen Ausführungsformen auch durch eine Kugelumlaufspindel ersetzt werden (nicht dargestellt).

Mit 55 ist in Fig. 1 ein Endanschlag bezeichnet, der auch als Industrie-Stoßdämpfer ausgebildet sein kann. Der Endanschlag 55 ist über eine Schraubspindel 56 von der Seite des Bodendeckels 25 in Richtung X oder Y über eine oder mehrere Schraubmuttern 57 einstellbar und arretierbar. Statt einer Schraubmutter können auch mehrere Muttern oder zusätzlich eine Kontermutter vorgesehen sein, um die jeweilige Einstellage zu arretieren. Durch die Einstellung des Endanschlages 55 über die Schraubspindel 56 läßt sich somit der Schwenkwinkel des Spannarmes 15 einstellen. Wie man erkennt, stützt sich die Schraubmutter 57 gegen die Verdickung 26 ab.

Im Spannkopf 1 können mindestens zwei beabstandete und bedämpfbare berührungslose Sensoren (Induktivschalter, Endschalter, Mikroschalter) vorgesehen sein, die die jeweilige Stellung des Spannarmes 15 ― indirekt ― dedektieren, zum Beispiel über die Position des linear verstellbaren Teils 13. Dies gilt auch für alle anderen Ausführungsformen. Die Sensoren können als austauschbares Set ausgebildet sein und durch einen engen, sich in Längsachsrichtung des Spannkopfes 1 erstreckenden Schlitz von der Rückseite 58 des Spannkopfes 1 in den Schlitz eingesteckt sein und diesen randdicht verschließen. Im Bedarfsfalle läßt sich dieses als einstückiges Bauteil handzuhabende Set gegen ein defektes Set oder anderes Set austauschen. Dabei ist die Anordnung so getroffen worden, daß die Kniehebelspannvorrichtungen im Bedarfsfalle von allen vier Seiten, also nicht nur von der Rückseite und der Vorderseite, sondern auch von den breiteren Seiten des Spannkopfes 1 in einer Produktionslinie zu befestigen sind. Zu diesem Zweck weist der Spannkopf 1 geeignete mit Gewinde versehene Sackbohrungen (nicht dargestellt) auf, die zum Beispiel beiderseits des zur Aufnahme der Kassette dienenden Längsschlitzes auch an der Rückseite vorgesehen sind.

Die in der Zusammenfassung, in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

### Bezugszeichenliste

- 1: Spannkopf
- 2: Gehäuse
- 3: Stator, Elektromotor
- 4: Rotor, Elektromotor
- 5: Welle, Hohlwelle
- 6: Kupplungsstück
- 7: Wälzlager
- 8: Flansch
- 9: Wand
- 10: Buchse, Schraubmutter
- 11: Schraubgewinde
- 12: Schraubgewinde
- 13: Teil, Schraubspindel
- 14: Kniehebelgelenk
- 15: Spannarm
- 16: Vierkant
- 17: Gegenstück
- 18: Mittellinie
- 19: Mittellinie
- 20: Wälzlager
- 21: Lagerbock
- 22: Schütz
- 23: Stecker
- 24: Elektrokabel
- 25: Bodendeckel
- 26: Verdickung
- 27: Aufnahmeelement, topfförmiges
- 28: Bremse, dauermagnetische
- 29: Teil, ringförmiges
- 30: Teil, ringförmiges
- 31: Spaltabstand
- 32: Kiefer, Widerlager
- 33: Gewindespindel
- 34: Wälzlager
- 35: Wälzlager
- 36: Schraubmutter
- 37: Schwenkachse
- 38: Lenker
- 39: Schwenkachse
- 40: Lenker
- 41: Achse
- 42: Schraubspindel
- 43: Wälzlager
- 44: Wälzlager
- 45: Schraubmutter
- 46: Schwenkachse
- 47: Lenker
- 48: Lenker
- 49: Achse
- 50: Achse
- 51: Greifarm
- 52: Greifarm
- 53: Achse
- 54: Achse
- 55: Endanschlag
- 56: Schraubspindel
- 57: Schraubmutter
- 58: Rückseite
- 59: Kupplung
- 60: Welle
- 61: Aufnahmeelement
- 62: Kupplung
- 63: Welle
- 64: Aufnahmeelement
- 65: Führungsnut
- A: Schwenkrichtung des Spannarmes 15
- B: Schwenkrichtung des Spannarmes 15
- X: Bewegungsrichtung
- Y: Bewegungsrichtung

### Literaturverzeichnis

| | |
|---|---|
| DE | 5 50 737 |
| DE | 7 08 439 |
| DE | 21 17 550 |
| DE | 22 22 686 |
| DE | 27 39 150 |
| DE | 29 31 539 C2 |
| DE | 36 13 644 C2 |
| DE | 36 38 526 |
| DE | 43 14 628 C1 |
| DE | 196 16 441 |
| DE-GM | 75 23 938 |
| DE-GM | 83 07 606 |
| DE-GM | 19 17 295 |
| US-PS | 4,137,784 |
| US-PS | 3,963,229 |
| US-PS | 2,390,022 |
| US-PS | 1,324,851 |
| US-PS | 1,404,862 |
| US-PS | 1,543,181 |
| US-PS | 733,614 |
| DD-A-138 643 | |
| GB-A-611 873 | |
| EP | 0 243 599 B1 |
| EP | 0 255 853 |

Prospekt der Firma MS Magnetfabrik Schramberg, 78713 Schramberg-Sulgen, Max-Planck-Str. 15, 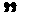 Ihr Partner für Dauermagnete", Copyright 1994, Ausgabe 04/97
Fachbuch K. Schreyer, Werkstückspanner (Vorrichtung), 3. Auflage, Springer-Verlag, Berlin, Heidelberg, New York, 1969, S. 80, 81, Bild 246

## Patentansprüche

1. Kraftangetriebene Kniehebelspannvorrichtung zur Verwendung im Karosseriebau der Kfz-Industrie, mit einem Spannkopf (1), einem sich koaxial an den Spannkopf (1) anschließenden Gehäuse (2), einem in dem Gehäuse (2) angeordneten elektromotorischen Antrieb für ein das Kniehebelgelenk (14) abwechselnd in entgegengesetzten Richtungen linear antreibbaren Teil (13, 36), das mit einem Längenabschnitt im Spannkopf (1) angeordnet ist, mindestens einem über das Kniehebelgelenk (14) antreibbaren Spannarm (15) oder Greifer (51, 52), und mit einer dem Elektromotor (3, 4) zugeordneten dauermagnetischen Bremse (28), dessen einer Teil (30) unbeweglich dem Gehäuse (2) oder dem Stator (3) während dessen anderer Teil (29) mit Spaltabstand (31) drehbeweglich der Welle (5) des Elektromotors (3, 4) zugeordnet ist.

2. Kniehebelspannvorrichtung nach Anspruch 1, **dadurch gekennzeichnet,** daß die beiden Teile (29, 30) der dauermagnetischen Bremse (28) scheibenförmig ausgebildet sind, wobei das eine Teil (30) in einem Lagerbock (21) für die Lagerung der Welle (5) und das andere Teil (29) auf dem freien Endabschnitt der Welle (5) des Elektromotors (3, 4) angeordnet und arretiert ist.

3. Kniehebelspannvorrichtung nach Anspruch 1 oder 2, **dadurch gekennzeichnet,** daß die dauermagnetische Bremse (28) eine Vielzahl von Polelementenpaaren aufweist.

4. Kniehebelspannvorrichtung nach Anspruch 1 oder einem der darauffolgenden Ansprüche, **dadurch gekennzeichnet,** daß die Welle (5) des Elektromotors (3, 4) als Hohlwelle ausgebildet ist und an ihrem dem Spannkopf (1) zugekehrten Endabschnitt eine Schraubmutter (10) aufweist, in der das linear antreibbare, als Schraubspindel ausgebildete Teil (13) ein- und ausschraubbar angeordnet ist.

5. Kniehebelspannvorrichtung nach Anspruch 1 oder einem der darauffolgenden Ansprüche, **dadurch gekennzeichnet,** daß das linear antreibbare Teil (13) in die Welle (5) des Elektromotors (3, 4) eintaucht.

6. Kniehebelspannvorrichtung nach Anspruch 1 oder einem der Ansprüche 2 bis 3, **dadurch gekennzeichnet,** daß eine Spindel (33) an beiden Endabschnitten im Spannkopf (1) gelagert ist und daß auf dieser Spindel (33) eine Schraubmutter (36) je nach Antriebsrichtung des Elektromotors (3, 4) in die eine oder in die andere Richtung schraubbar ist und mit dieser Schraubmutter (36) über eine Schwenkachse (37) ein Lenker (38) des Kniehebelgelenks (14) schwenkbeweglich gekuppelt ist.

7. Kniehebelspannvorrichtung nach Anspruch 6, **dadurch gekennzeichnet,** daß mit der Schraubmutter (36) mehrere Lenkerelemente (47, 48) gekuppelt sind, die mehrere Greiferarme (51, 52) antreiben.

8. Kniehebelspannvorrichtung nach Anspruch 1 oder einem der darauffolgenden Ansprüche, **dadurch gekennzeichnet,** daß der Spindeltrieb als Kugelgewindetrieb bzw. als Kugelgewindespindeltrieb ausgebildet ist.

9. Kniehebelspannvorrichtung nach Anspruch 1 oder einem der darauffolgenden Ansprüche, **dadurch gekennzeichnet,** daß dem linear antreibbaren Teil (13) ein Endanschlag (55) zugeordnet ist.

10. Kniehebelspannvorrichtung nach Anspruch 9, **dadurch gekennzeichnet,** daß der Endanschlag (55) in der Hohlwelle (5) des Elektromotors (3, 4) angeordnet ist.

11. Kniehebelspannvorrichtung nach Anspruch 10, **dadurch gekennzeichnet,** daß der Endanschlag (55) von der dem Spannkopf (1) abgekehrten Stirnseite her zur Veränderung des Schwenkwinkels des Spannarms (15) einstellbar und arretierbar ist.

12. Kniehebelspannvorrichtung nach den Ansprüchen 10 oder 11, **dadurch gekennzeichnet,** daß der Endanschlag (55) als Industriestoßdämpfer ausgebildet ist.
